# EUROPÄISCHE PATENTSCHRIFT

(11) **EP 1 057 243 B1**
(45) Veröffentlichungstag und Bekanntmachung des Hinweises auf die Patenterteilung: **09.07.2003**
(21) Anmeldenummer: 99908914.7
(22) Anmeldetag: 18.02.1999
(51) Int. Cl.: H02K 23/66, G01P 3/487

(54) **DREHWINKELMESSEINRICHTUNG MIT MAGNETISIERTEM KOMMUTATOR**
ROTATION ANGLE MEASURING DEVICE WITH MAGNETISED COMMUTATOR
DISPOSITIF DE MESURE D'ANGLE DE ROTATION A COLLECTEUR MAGNETISE

(30) Priorität: 21.02.1998 DE 19811424
(43) Veröffentlichungstag der Anmeldung: 06.12.2000
(73) Patentinhaber: Valeo Motoren und Aktuatoren GmbH, 74321 Bietigheim-Bissingen (DE)
(72) Erfinder: BAUMEISTER, Udo, D-74379 Ingersheim (DE); FREY, Ronald, D-74357 Bönnigheim (DE); HÖGLER, Eberhard, D-74391 Erligheim (DE); ANDRES, Peter, D-65239 Hochheim (DE)
(74) Vertreter: Dreiss, Fuhlendorf, Steimle & Becker
(86) Internationale Anmeldenummer: EP9901020
(87) Internationale Veröffentlichungsnummer: WO99043071

(56) Entgegenhaltungen:
- EP-A- 0 359 853
- EP-A- 0 753 931
- DE-A- 2 748 502
- DE-U- 9 006 935
- PATENT ABSTRACTS OF JAPAN vol. 013, no. 343 (E-796), 2. August 1989 -& JP 01 099490 A (SECOH GIKEN INC), 18. April 1989
- PATENT ABSTRACTS OF JAPAN vol. 013, no. 366 (E-806), 15. August 1989 -& JP 01 122386 A (SECOH GIKEN INC), 15. Mai 1989

## Beschreibung

Die Erfindung betrifft eine Einrichtung zur Messung des Drehwinkels oder einer hiervon abgeleiteten Größe in einer mit einem Kommutator versehenen elektrischen Maschine. Bei der Maschine kann es sich um einen Motor oder um einen Dynamo (Generator) handeln. Für die Erfindung wesentlich ist es, daß ein Kommutator vorgesehen sein soll, der in an sich bekannter Weise mit elektrisch leitenden Kontakten versehen ist, über welche zu einer oder mehreren Rotorspulen in zeitlicher Reihenfolge Ströme geleitet werden, die ein mehr oder weniger' stetig sich änderndes Feld erzeugen. Bei einem Dynamo kann der Kommutator umgekehrt zur Abnahme des erzeugten Stromes dienen. Aber auch bei ringförmigen Schleifkontakten ist die Erfindung anwendbar.

Die Lamellen des Kommutators bestehen aus einem elektrisch leitfähigen Material. Die Lamellen werden von einem Grundkörper des Kommutators getragen, der auf einer Rotorwelle der Maschine angeordnet ist. Der Grundkörper weist zumindest abschnittsweise dauerhaft magnetisierte Bereiche auf. Der Stator der Maschine ist mit einem auf die Drehlage des Kommutators ansprechenden Sensor versehen.

Vielfach ist es erwünscht, die Drehlage des Rotors oder eine hiervon abgeleitete Winkelgröße des Rotors einer elektrischen Maschine zu bestimmen, unabhängig davon, ob die Maschine im Generator- oder Motorbetrieb betrieben wird. Hierzu ist beispielsweise in der DE-OS 41 03 561 bekannt, die Welle eines Motors mit Magneten zu verbinden und in dem Stator diesen Magneten Hall-Elemente zuzuordnen. Aus dem Stand der Technik ist es des weiteren bekannt, auf einer Rotorwelle einer elektrischen Maschine Magnete aufzusetzen, deren Drehlage durch einen induktiven Sensor abgetastet wird, wobei auf der Rotorwelle axial versetzt zu den Magneten ein Kommutator angeordnet ist.

In der EP 0 359 853 A1 ist auf die Rotorwelle eines Kommutatormotors ein magnetisches Polrad aufgesetzt, wobei die Drehlage der Polstücke des Polrads durch Hall-Elemente abgetastet wird. Zwar wird offenbart, die Lamellen des Kommutators und das Polrad auf einem gemeinsamen Grundkörper anzuordnen, das Polrad und der Kommutator sind jedoch in jedem Fall axial versetzt zueinander auf der Rotorwelle angeordnet.

Da der für Kleinmotoren zur Verfügung stehende Raum oft stark beschränkt ist, besteht die Aufgabe, die Drehmeßeinrichtung möglichst in andere Baugruppen der elektrischen Maschine zu integrieren. Die Erfindung geht daher aus von einer Drehmeßeinrichtung der sich aus dem Oberbegriff des Anspruchs 1 ergebenden Gattung. Zur Lösung der Aufgabe schlägt die. Erfindung vor, dass die Lamellen des Kommutators aus einem für ein Magnetfeld durchlässigen Material, insbesondere aus Kupfer, bestehen und dass die magnetisierten Bereiche des Grundkörpers in radialer Richtung gesehen zumindest teilweise zwischen den Lamellen und einer Rotorwelle der Maschine angeordnet sind.

Die Erfindung besteht im Prinzip also darin, die Tatsache auszunutzen, daß der Grundkörper eines Kommutators durchaus in der Lage ist, mit einem Magnetfeld durchsetzt zu werden, ohne die grundsätzliche Aufgabe des Kommutators, der Kontaktgabe seiner Lamellen mit den anliegenden Bürsten, zu beeinträchtigen.

Dementsprechend ist es erfindungsgemäß durchaus möglich, in den Kommutator neben der Aufgabe der Stromführung noch die Bildung eines magnetischen Drehfeldes zu integrieren.

Da in den meisten elektrischen Maschinen ohnedies ein drehendes Magnetfeld vorhanden ist, ist es theoretisch möglich, auch ohne ein besonderes in den Kommutator integriertes Magnetfeld auszukommen. Das in den Kommutator integrierte Magnetfeld ist aber insbesondere in der Lage, eine hinreichende Feldstärke zur Betätigung eines Hall-Elementes gemäß Anspruch 2 darzustellen, wobei das Hall-Element in der Nähe des Kommutators im Stator angeordnet sein sollte. Selbstverständlich läßt sich eine verbesserte Drehfeldmessung durch die Verwendung mehrerer Hall-Elemente erreichen. Die Erfindung ist nicht auf die Ausführungsbeispiele beschränkt, in denen die Drehlage des Rotors gemessen wird. Mit der erfindungsgemäßen Drehwinkelmeßeinrichtung kann auch die Drehgeschwindigkeit, die Drehbeschleunigung oder eine andere von der Drehlage abgeleitete Größe des Rotors bestimmt werden.

Die Lamellen des Kommutators dürfen über den Kommutator selbst nicht elektrisch miteinander verbunden sein. Dies läßt sich dadurch erreichen, daß man die einzelnen Lamellen mit einer Isolierschicht umgibt. In vorteilhafter Weiterbildung der Erfindung empfiehlt sich aber die Merkmalskombination nach Anspruch 3 gemäß der der Grundkörper aus einem elektrisch isolierenden Material besteht, das aber derart ausgestaltet ist, daß es den Magnetfluß durch den Grundkörper selbst zuläßt. Der Grundkörper besteht vorzugsweise aus Kunststoff.

Für die Anordnung eines oder mehrerer Magnete innerhalb des Grundkörpers im Kommutator stehen in vorteilhafter Weiterbildung eine Reihe von Maßnahmen zur Verfügung. Hierzu schlägt Anspruch 4 vor, zumindest einen vorgefertigten Magneten in eine entsprechende Aussparung des Kommutators einzufügen.

Der Grundkörper des Kommutators kann aber auch aus einem magnetisierbaren elektrisch nicht leitenden gegossenen Material bestehen und nachfolgend dauerhaft magnetisiert werden oder schon eine Magnetisierung während des Gußvorgangs erfahren. Alternativ wird vorgeschlagen, daß der Grundkörper aus einem gesinterten Magneten besteht, der eine Magnetisierung während oder nach dem Sintervorgang erfährt.

Der Vorteil der Erfindung besteht insbesondere darin, daß sich der Sensor, insbesondere Hall-Sensor, in der gleichen Ebene wie die Kohlebürsten befinden kann. Dadurch kann die Baulänge des Motors verkürzt werden. Ebenfalls können die Sensoren räumlich weiter von den am hinteren Lagerschild befindlichen Entstördrosseln des Motors getrennt werden. Auf diese Weise wird eine Beeinflussung der Sensoren durch die Drosseln verringert.

Mehrere bevorzugte Ausführungsbeispiele der vorliegenden Erfindung werden im Folgenden anhand der Zeichnungen näher erläutert. Es zeigen:
- Fig. 1: einen Kommutator einer elektrischen Maschine mit einer erfindungsgemäßen Drehwinkelmeßeinrichtung in einem Längsschnitt;
- Fig. 2: den Kommutator aus Fig. 1 gemäß einer ersten Ausführungsform in einem Querschnitt; und
- Fig. 3: den Kommutator aus Fig. 1 gemäß einer zweiten Ausführungsform in einem Querschnitt.

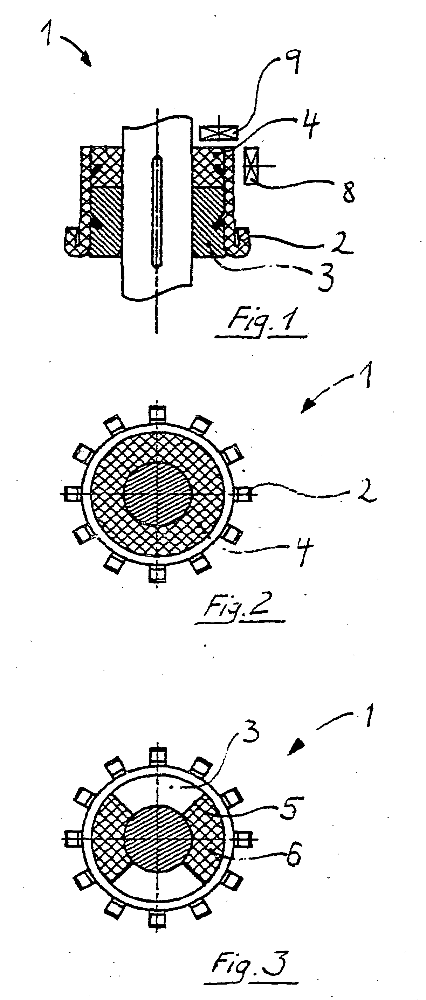

In Fig. 1 ist ein Kommutator einer elektrischen Maschine in seiner Gesamtheit mit dem Bezugszeichen 1 gekennzeichnet. Bei der elektrischen Maschine kann es sich um einen Motor oder um einen Dynamo (Generator) handeln. Bei einem Motor ist der Kommutator 1 mit elektrisch leitenden Kontakten in Form von Lamellen 2 versehen, über die zu einer oder mehreren Rotorspulen in zeitlicher Reihenfolge Ströme geleitet werden, die ein sich mehr oder weniger stetig änderndes Magnetfeld erzeugen. Bei einem Dynamo kann der Kommutator 1 umgekehrt zur Abnahme des erzeugten Stromes dienen.

Die Lamellen 2 des Kommutators 1 bestehen aus einem elektrisch leitfähigen, für ein Magnetfeld durchlässigen Material, im vorliegenden Ausführungsbeispiel aus Kupfer. Der Kommutator 1 weist einen Grundkörper 3 auf, der die Lamellen 2 trägt. Der Grundkörper 3 besteht aus einem elektrisch isolierenden Material, das aber den Magnetfluß durch den Grundkörper 3 selbst zuläßt. Bei den Ausführungsbeispielen nach Fig. 1 bis Fig. 3 besteht der Grundkörper 3 aus Kunststoff.

Der Grundkörper 3 ist abschnittsweise magnetisiert. Das abschnittsweise Magnetisieren des Grundkörpers 3 kann auf unterschiedliche Arten erfolgen. Bei dem Ausführungsbeispiel nach Fig. 1 und Fig. 2 ist in dem Kunststoff-Grundkörper 3 des Kommutators 1 eine ringförmige Aussparung 5 ausgebildet, in die ein Ringmagnet 4 eingebracht ist. Bei dem Ausführungsbeispiel nach Fig. 3 sind in dem Kunststoff-Grundkörper 3 segmentförmige. Aussparungen 5 ausgebildet, in die vorgefertigte Magnetsegmente 6 eingebracht sind.

Bei einem dritten Ausführungsbeispiel schließlich besteht der gesamte Grundkörper 3 aus einem Magneten aus elektrisch isolierendem und magnetisierbaren Material. Der Magnet des Grundkörpers 3 ist bspw. gegossen oder gesintert. Während oder nach dem Gußvorgang bzw. Sintervorgang erfährt der Magnet abschnittsweise oder insgesamt eine Magnetisierung.

An dem Stator der elektrischen Maschine sind geeignete Sensoren 8, 9 angeordnet, durch die bei einer Drehbewegung des Kommutators 1 aus dem sich drehenden Magnetfeld der magnetisierten Abschnitte 4, 6 des Grundkörpers 3 die Drehlage des Kommutators 1 bzw. des Rotors der elektrischen Maschine ermittelt wird. Bei den Ausführungsbeispielen nach Fig. 1 bis Fig. 3 sind die Sensoren 8, 9 als Hall-Sensoren ausgebildet. Die Abtastung des Magnetfelds erfolgt mit dem Sensor 8 in radialer Richtung und mit dem Sensor 9 in axialer Richtung. Es ist denkbar, den Stator mit mehreren Sensoren 8, 9 mit der gleichen oder mit unterschiedlicher Abtastrichtung zu versehen. Die magnetisierten Abschnitte 4, 6 des Grundkörpers 3 müssen entsprechend der Abtastrichtung der verwendeten Sensoren 8, 9 aufmagnetisiert werden.

Neben der Drehlage des Rotors ist es mit der erfindungsgemäßen Drehwinkelmeßeinrichtung auch möglich, die Drehgeschwindigkeit, die Drehbeschleunigung oder eine andere von der Drehlage abgeleitete Größe des Rotors zu bestimmen. Der Vorteil der Erfindung besteht insbesondere darin, daß sich der oder die Sensoren 8, 9 in der gleichen Ebene wie die Kohlebürsten der elektrischen Maschine befinden können. Dadurch kann die Baulänge der elektrischen Maschine verkürzt werden. Ebenfalls können die Sensoren 8, 9 räumlich weiter von den am hinteren Lagerschild befindlichen Entstördrosseln des Motors getrennt werden. Auf diese Weise wird eine Beeinflussung der Sensoren 8, 9 durch die Drosseln verringert.

## Patentansprüche

1. Drehwinkelmeßeinrichtung für eine mit einem Kommutator (1) versehene elektrische Maschine, wobei die Lamellen (2) des Kommutators (1) aus einem elektrisch leitfähigen Material bestehen, wobei ein die Lamellen (2) tragender Grundkörper (3) des Kommutators (1) zumindest abschnittsweise dauerhaft magnetisierte Bereiche (4, 6 ) aufweist und wobei der Stator der Maschine mit einem auf die Drehlage des Kommutators (1) ansprechenden Sensor (8; 9) versehen ist, **dadurch gekennzeichnet, dass** die Lamellen (2) des Kommutators (1) aus einem für ein Magnetfeld durchlässigen Material, insbesondere aus Kupfer, bestehen und dass die magnetisierten Bereiche (4, 6) des Grundkörpers (3) in radialer Richtung gesehen zumindest teilweise zwischen den Lamellen (2) und einer Rotorwelle der Maschine angeordnet sind.

2. Drehwinkelmeßeinrichtung nach Anspruch 1, **dadurch gekennzeichnet, daß** der Sensor (8; 9) mindestens ein Hall-Element aufweist, welches von dem Magnetfeld des Kommutators (1) durchflutet wird.

3. Drehwinkelmeßeinrichtung nach einem der vorangegangenen Ansprüche, **dadurch gekennzeichnet, daß** der Grundkörper (3) aus einem elektrisch isolierenden und für ein Magnetfeld durchlässigen Material gebildet ist.

4. Drehwinkelmeßeinrichtung nach Anspruch 3, **dadurch gekennzeichnet, daß** der Grundkörper (3) aus Kunststoff besteht.

5. Drehwinkelmeßeinrichtung nach einem der vorangegangenen Ansprüche, **dadurch gekennzeichnet, daß** der Grundkörper (3) mindestens eine Aussparung (5) aufweist, in die ein vorgefertigter Magnet, insbesondere ein Ringmagnet (4) oder ein Magnetsegment (6), eingesetzt ist.

6. Drehwinkelmeßeinrichtung nach einem der vorangegangenen Ansprüche, **dadurch gekennzeichnet, daß** der Grundkörper (3) im wesentlichen aus einem Magneten aus elektrisch isolierendem und magnetisierbaren Material gebildet ist.

7. Drehwinkelmeßeinrichtung nach Anspruch 5, **dadurch gekennzeichnet, daß** der Magnet des Grundkörpers (3) gegossen ist.

8. Drehwinkelmeßeinrichtung nach Anspruch 5, **dadurch gekennzeichnet, daß** der Magnet des Grundkörpers (3) gesintert ist.

## Claims

1. Device for measuring the angle of rotation for an electrical machine equipped with a commutator (1), in which the segments (2) of the commutator (1) are formed of an electrically conductive material, wherein a basic body (3) of the commutator (1) carrying the segments (2) having at least sectionally permanent magnetized areas (4, 6) and wherein the stator of the machine is provided with a sensor (8, 9) responding to the rotary status of the commutator (1), **characterized in that** the segments (2) of the commutator (1) are formed of a material penetrable by a magnetic field, especially of copper, and that the magnetized sections (4, 6) of the basic body (3) are arranged in radial direction at least partially between the sections (2) and a rotary shaft of the machine.

2. Device for measuring the angle of rotation according to claim 1, **characterized in that** the sensor (8, 9) has at least one Hall element, which is penetrable by the magnetic field of the commutator (1).

3. Device for measuring the angle of rotation according to one of the preceding claims, **characterized in that** the basic body (3) is made of an electrically conductive material permeable to a magnetic field.

4. Device for measuring the angle of rotation according to claim 3, **characterized in that** the basic body (3) is made of plastic.

5. Device for measuring the angle of rotation according to one of the preceding claims, **characterized in that** the basic body (3) has at least one recess (5), into which a prefabricated magnet, especially an annular magnet (4) or a magnetic segment (6), is fitted.

6. Device for measuring the angle of rotation according to one of the preceding claims, **characterized in that** the basic body (3) essentially consists of a magnet made of electrically insulating and magnetizable material.

7. Device for measuring the angle of rotation according to claim 5, **characterized in that** the magnet of the basic body (3) is molded.

8. Device for measuring the angle of rotation according to 51aim 5, **characterized in that** the magnet of the basic body (3) is sintered.

## Revendications

1. Dispositif de mesure d'angle de rotation destiné à une machine électrique munie d'un collecteur (1), les lamelles (2) du collecteur (1) étant réalisées dans un matériau électro-conducteur, sachant que le collecteur (1) est formé par un corps de base (3), qui porte les lamelles (2) et comporte au moins dans certaines parties, des zones (4, 6) à aimantation permanente et le stator de la machine est muni d'un capteur (8 ; 9) détectant la position de rotation du collecteur (1), **caractérisé en ce que** les lamelles (2) du collecteur (1) sont réalisées dans un matériau laissant passer un champ magnétique, en particulier en cuivre, et **en ce que** les zones magnétisées (4, 6) du corps de base (3) sont disposées, selon une direction radiale, au moins partiellement entre les lamelles (2) et un arbre du rotor de la machine.

2. Dispositif de mesure d'angle de rotation selon la revendication 1, **caractérisé en ce que** le capteur (8 ; 9) comporte au moins un élément à effet Hall, traversé par le champ magnétique du collecteur (1).

3. Dispositif de mesure d'angle de rotation selon l'une quelconque des revendications précédentes, **caractérisé en ce que** le corps de base (3) est réalisé dans un matériau isolant et laissant passer un champ magnétique.

4. Dispositif de mesure d'angle de rotation selon la revendication 3, **caractérisé en ce que** le corps de base (3) est réalisé en matière plastique.

5. Dispositif de mesure d'angle de rotation selon l'une quelconque des revendications précédentes, **caractérisé en ce que** le corps de base (3) comporte au moins un évidement (5), dans lequel est inséré un aimant préfabriqué, en particulier une bague d'aimant 4 ou un segment d'aimant 6.

6. Dispositif de mesure d'angle de rotation selon l'une quelconque des revendications précédentes, **caractérisé en ce que** le corps de base (3) est formé sensiblement par un aimant réalisé dans un matériau isolant et magnétisable.

7. Dispositif de mesure d'angle de rotation selon la revendication 5, **caractérisé en ce que** l'aimant du corps de base (3) est réalisé par moulage.

8. Dispositif de mesure d'angle de rotation selon la revendication 5, **caractérisé en ce que** l'aimant du corps de base (3) est réalisé par frittage.
